# EUROPEAN PATENT APPLICATION

(11) **EP 3 091 402 A1**
(43) Date of publication of application: **09.11.2016**
(21) Application number: 16167906.3
(22) Date of filing: 02.05.2016
(51) Int. Cl.: G04G 21/00, H04B 1/3827, G04G 9/00

(54) **MOBILE PHONE IN THE FORM OF A WRISTWATCH**

(30) Priority: 05.05.2015 CH 6132015
(71) Applicant: Swissgear Sarl, 6340 Baar (CH)
(72) Inventor: Li, Zhijian, 350001 Fuzhou Fuijan (CN)
(74) Representative: Riederer Hasler & Partner Patentanwälte AG

(57) **Abstract**

The invention relates to a phone in the form of a wristwatch comprising: a main body (21); a band (71) connected to the main body (21) and adapted for securing the main body (21) to the wrist of a user; a transparent cover (27); a display (35) having a continuous display area visible through the transparent cover (27); watch-components including a movement (37) and at least one hand (31), wherein the hand (31) is rotatable about an axis and arranged between the transparent cover (27) and the display (35); characterized in that the continuous display area takes up at least half of the clock-face (34) and/or at least half of the area (34) enclosed by a circle centered at the axis and having a radius corresponding to the length of the hand (31).

## Description

### Field of the invention

The invention relates to a wrist-worn electronic device that is a phone and also a watch.

### Background of the invention

There exists a wide variety of wristwatches including digital and analog watches. While the former indicate time via a display the latter are for the same purpose equipped with watch hands that are rotatable about an axis.

Advanced wrist-worn electronic devices, so called "smart watches", are - in addition to their many other functions - capable of indicating the time in different ways, including by emulating an analog watch. Examples of such electronic devices are described for example in US 2012/0194976 A1, US 2014/0139637 A1, or US 2011/0221688 A1 These devices are essentially wrist-worn smart phones or accessories for smart phones.

In the past, phones have also been added to analog watches or vice versa, to yield somewhat clunky devices. Examples are disclosed in WO 2010/103257 or US 2009/0069045 A1. A related attempt at combining phones with analogue watches is known from EP 1480090 A1 which teaches a portable phone with a display on its front side and an analogue watch integrated into the back side of the device.

The following documents have been revealed by a prior art search carried out by a patent office: KR20110012360A, US6192253B1, US2014171156A1, and EP0927917.

Judging from a machine translation, the KR20110012360A discloses a mobile terminal which can take the form of a mobile phone, a smartphone, a notebook, a digital broadcasting terminal, a PDA, a portable multimedia player, a navigation device etc. According to one embodiment the mobile terminal is provided in the form of a wrist watch with analogue clock components and a display, wherein the display can be arranged between the hands and the movement of the analogue clock. The reference lists essentially all components and uses any mobile device can possibly have. However, in terms of embodiments it seems to be limited to a somewhat sophisticated watch which shows time-related information on a display and, like many smartwatches, acts as an accessory to a smartphone.

The US6192253B1 discloses a wrist-worn mobile phone. In addition to a replaceable main battery there is a backup battery that prevents the loss of the clock time and phone settings during replacement of the main battery. The backup-battery only powers the data storage, not the display. Consequently, the phone is not capable of displaying the current time when the main battery is disconnected.

The US2014/171156A1describes a wristwatch with analogue watch components and a display. The watch is not a mobile phone but merely used as an accessory for a mobile phone. Furthermore, the movement of the analogue clock is located on the same side of the display as the hands, which leads to either the movement covering part of the display or the display partially covering the hands.

### Object of the invention

It is an object of the present invention to provide an (alternative) electronic device that is both a phone and a wristwatch.

Preferred embodiments of the device can allow for long battery life, compact design, (greater) independence from smart-phones, and/or other advantages.

### Detailed description of the invention

The object of the invention is achieved with a mobile phone in the form of a wristwatch according to claim 1.

Disclosed is inter alia a mobile phone in the form of a wristwatch (also referred to as "the device") comprising: a main body; a band connected to the main body and adapted for securing the main body to the wrist of a user; a transparent cover; a display comprising a continuous display area visible through the transparent cover; watch-components including (preferably a movement and) at least one hand (preferably an hour hand and a minute hand and optionally a second hand), wherein the hand is rotatable about an axis and arranged between the transparent cover and the display; characterized in that the continuous display area preferably takes up and/or covers and/or occupies at least half of the clock-face and/or at least half of the area enclosed by a circle centered at the axis and having a radius equal to the length of the hand.

Disclosed is also a system comprising a first mobile phone (the mobile phone in the form of a wristwatch) as described in this document and a second mobile phone, wherein the second mobile phone is adapted and/or configured and/or programmed to redirect incoming phone calls to the first mobile phone.

In the following, features are described which are to be regarded (individually) as being preferred features (even if they are not called "preferred"). They shall be disclosed individually or in any combination (as part(s) of any device or system) provided such features are not mutually exclusive.

Currently, there are a number of different so called "smart watches" on sale which have displays that usually take up more or less the entire top face of the respective device. Such smart-watches are - with some exceptions - mere accessories to mobile phones and it is therefore necessary to also carry a mobile phone to use most of the smart-watch's functions. The operating system of these smart-watches needs to be booted at all times and merely letting the user know what time it is requires the activation of the display. Unsurprisingly, such devices require charging on an almost daily basis.

Some known watches - which may or may not be called "smart" - have hour and minute hands but are otherwise very limited regarding their functionality. They are even more dependent on smart-phones than the above described "smart-watches". Watches of this kind may be equipped with displays which are however small in order to keep the power consumption low. These devices are first and foremost normal "analogue" wrist watches with very limited additional "smart" functionality.

Thus, on the one hand there is the "smart-watch" concept which is aimed at functionality but suffers from high power consumption. On the other hand there is the concept of an analogue watch that has a long battery life but very limited functionality.

The device described in this document (i.e. the mobile phone in the form of a wristwatch) combines a fully functional mobile phone with a fully functional watch. Depending on the specifics of the embodiment this allows for a number of advantages in respect of power consumption and ease of use including a greater independence from additional devices.

For example, the device is capable of informing the user about the present time without him or her having to activate "non-watch-components" like the display which requires substantially more power. In one embodiment essentially all non-watch functions and/or non-watch components could be switched off, thereby lowering the power consumption and massively extending battery life.

There exists a prejudice against using an hour hand and a minute hand that move over a display and, while doing so, impair visibility of the display. However, the applicant notes that even if using both an hour hand and a minute hand at least half of the clock-face is always visible uninterrupted by any of the hands. By using appropriate software displaying content can be optimized for the position of the hands providing a very comfortable visual experience to the user.

The device described in this document is both a mobile phone and a wristwatch. It can be used as a stand-alone device and/or a stand-alone mobile phone and a stand-alone wristwatch. In particular, the device can be used as a phone and as a watch independent of an (additional) phone and/or without the presence or use or help of an (additional) phone.

For this purpose the device can be (independently) capable of and/or adapted for connecting to a cellular network and/or the device can comprise means for storing and using an international mobile subscriber identity (also known as "IMSI") for connecting to a cellular network.

Preferably, the device comprises a subscriber identity module (also known as "subscriber identification module" or "SIM") and/or a SIM-card-slot (preferably with a SIM-card).

The device has the form of a wristwatch and comprises a main body and a band connected to the main body and adapted for securing the main body to the wrist of a user.

The band can comprise one, two, three or more band portions. For example, the band can comprise a first band portion (preferably removably) connected to the main body (preferably at a first hinge) and/or to the second band portion. Additionally, the band can comprise a second band portion (preferably removably) connected to the main body (preferably at a second hinge) and/or to the first band portion.

For connecting to one another the first band portion and the second band portion the device can comprise an attachment mechanism (for example a clasp or a buckle).

The main body and/or the band (in particular the first band portion and/or the second band portion) can comprise one or more electrical components.

The one or more electrical components can include for example one or more antennae and/or wireless communication transceivers (for example Bluetooth and/or WiFi and/or GSM) and/or one or more GPS receivers (for example NAVSTAR and/or GLONASS and/or GALILEO) and/or one or more sensors (for example a temperature sensor and/or an air pressure sensor and/or an accelerometer) and/or a microphone and/or a speaker.

In an implementation the device (in particular the band and/or the first band portion and/or the second band portion and/or the main body) comprises a microphone and/or a speaker. For example, the microphone can be arranged at a first end of the first or second band portion whereas the speaker is arranged at a second end of the same band portion. Alternatively or in addition thereto the speaker can (when the device is secured to the wrist of a user) be arranged on the side opposite the main body (in relation to the wrist) and/or at the underside of the wrist. The microphone may be arranged on the band next to the main body.

Instead of or additionally to a microphone and/or a speaker the device can comprise a receptacle for receiving an audio jack which can be associated with a speaker and/or microphone (for example an earphone or headset for audio output or pickup). It is also possible to connect a microphone and/or a speaker wirelessly to the device for example via Bluetooth.

In particular, the band and/or the first band portion and/or the second band portion can comprise one or more antennae.

It is preferred if one or more or all of the electrical components of the band (in particular of the first band portion and/or of the second band portion) are parts of a flexible printed circuit (FPC). In particular this can apply to one or more antennae and/or one or more transceivers described above.

The band is preferably essentially made of non-metallic material. In particular, if the band includes an antenna or a transceiver this feature improves signal quality.

The device can comprise one or more sensors wherein at least one sensor can be comprised in the main body and at least one sensor can be comprised in the band.

The main body can comprise a heart beat sensor which is for example integrated into the bottom of the main body and/or the side of the main body facing and/or contacting the wrist of the user.

In an implementation the first band portion and the second band portion are removably connected to one another and/or to the main body.

The one or more electrical components of the main body can be electrically coupled to the one or more electrical components of the band (especially of the first and/or second band portion). Alternatively or in addition thereto, the one or more electrical components of the first band portion can be electrically coupled to the one or more electrical components of the second band portion. Optionally, the said electrical coupling can be achieved by electrical connectors.

The band and/or the first band portion and/or the second band portion can be detachably connected to the main body. In an implementation the first band portion and the second band portion can be detachably connected to one another.

If both the main body and the band (in particular the first band portion and/or the second band portion) comprise an electrical component the said electrical components can be detachably (electrically) connected to one another via an electrical connector.

According to one embodiment the electronic components which have been described as parts of the band (in particular the antennae and/or the microphone and/or the speaker) can instead be integrated into the lugs to which the band is connected.

Preferably, the band has upper portions that cover the tops of the lugs and lower portions that cover the bottoms of the lugs.

The device comprises watch-components including a movement as well as one, two, three or more hands. In this document the one or more hands are also called "the hands". The hands preferably include an hour hand and a minute hand.

The hands are rotatable and/or pivotable about an axis. The movement effects said rotation and/or the hands are operatively connected to the movement.

The device further comprises a display and a transparent cover wherein the hands are arranged between the transparent cover and the display and/ or the hands are rotatable within a space between the transparent cover and the display.

According to an embodiment the transparent cover is arranged in a first plane, the display and/or display area is arranged in a second plane, and the hands are arranged and/or rotatable in a third plane, wherein the third plane is arranged between the first plane and the second plane.

The transparent cover can for example be essentially disk-shaped. According to an embodiment the transparent cover is essentially round. The transparent cover can for example be made of glass or sapphire.

The device can comprise a bezel which can for example be essentially ringshaped.

In an implementation the device can comprise graduations and/or markings (preferably hour markings and/or minute markings). The markings can be arranged at the periphery of the clock-face and/or adjacent to the rim of the transparent cover and/or on the bezel.

According to one aspect the display can be an electronic visual display and/or a full-area display and/or a 2-dimensional display and/or *not* a segment display and/or a video display and/or a (preferably back-lit) flat panel display and/or a fixed picture-element (pixel) array display and/or a liquid crystal display (LCD) or a light emitting diode (LED or OLED) display or an electrophoretic display (or more generally an electronic paper, e-paper or electronic ink display).

The display can comprise a continuous display area which is visible to the user through the transparent cover. In this document by "the display area" or "the first display area" the aforementioned continuous display area is referred to (if not specified otherwise).

The display area and/or the display can have at least 400, 900, 2500, or 10000 pixel (picture elements).

Preferably, the display area and/or the display has a size of more than 2 or 3 or 4 or 5 square centimeters and/or less than 100 or 50 or 30 square centimeters.

It is useful if the display area takes up or occupies or covers at least half (or at least 60, 80 or 90 percent) of the clock-face and/or of the area enclosed by a circle centered at the axis and having a radius corresponding to the length of the hand (preferably the longest hand or the minute hand or the hour hand). The said area can optionally correspond to the area that is passed over by the said hand during a full rotation about the axis. Alternatively or in addition thereto the size of the display area can correspond to at least 50, 60, 80 or 90 percent of the size of an area enclosed by a circle as defined above. In an implementation the display and/or the display area can be arranged within an area that essentially corresponds in size and shape to the transparent cover and is located directly opposite (in respect of the hands) of the transparent cover.

The display and/or the display area can be arranged between the hands and the movement.

In an embodiment, the hands and the movement are connected (preferably by a shaft) via an opening extending through the display. The opening can for example be essentially circular or rectangular. In particular, the opening can be located at the place where axis is and/ or it can extend along the axis about which the hands rotate.

In an implementation, the opening is encircled and/ or surrounded by the display and/or the display area.

In addition to the (first) display and/or the (first) display area the device can comprise one, two, three, or more additional displays and/or display areas. These additional displays and/or display areas can be arranged in the same plane as the (first) display and/or the (first) display area.

In an implementation, the display can comprise two or more display areas. The two or more display areas and/ or the borders of the two or more display areas can for example be defined (at least partially) by a frame that is arranged between the hands and the display. For example there may be a (first) display area and a smaller (second) display area. An additional (second) display area facilitates the identification of items displayed by the display. Depending on the position of the arm of a user wearing the device the orientation of the device may vary considerably (more so than a smartphone which is normally looked at in one of two positions). Important notification could for example be displayed in the smaller (second) display area clearly set apart from the larger (first) display area by the frame.

The device can comprise a circuit board. It is preferred that the device comprises a printed circuit board assembly (PCBA).

The circuit board can comprise one or more of the above mentioned electric components of the main body or it may be electrically connected to one or more of them. It is useful, if the circuit board comprises a processor, preferably a micro processor.

The device can be configured for displaying characters (for example letters and/or numbers) and/or images (for example in the form of static images or video) on the display area.

In an implementation the device comprises or is controlled by an operating system.

One of the device's electric components can be a data storage component (preferably with more than 50, 100 or 500 Megabytes (MB) of memory capacity). The data storage component could for example have a memory capacity of about 512 Megabytes (MB) in a first version of the device and about 32 Gigabytes (GB) in an advanced version.

In an implementation the device and/or the main body comprises one or more actuating means, for example one or more buttons or one or more crowns.

The actuating means can be adapted for controlling and/or can be operatively connected to one or more components of the device, in particular one or more of the electric components of the main body (for example the circuit board) and/or of the band.

For example, the actuating means can be adapted for switching one or more of the components on or off or to change the component's settings or configuration. One actuating means can for example be configured for switching the display on and/or off.

It would also be useful if all or the majority of components that are not watch-components and/or of the components that are powered by the first battery could be deactivated. One of the actuating means could be configured for this purpose.

Preferably, one actuating means (for example a crown) is operatively connected to the movement or the hands for rotating the hands about the axis (for example for adjusting the time).

According to an aspect the device can comprise a (first) battery, preferably a rechargeable battery like a lithium battery. In addition, the devices can comprise a second battery, preferably a button cell.

If the device comprises two batteries, the first battery can for example be adapted for providing power to the display (and/or to the non-watch components, in particular the PCBA) and the second battery can be adapted for providing power to the movement (and/or the watch-components).

Usually, the display will use considerably more power than the watch-components. By providing a separate battery that powers the watch-components they remain operational even after the battery powering the display is completely discharged.

The watch-components and/or the movement can include a crystal oscillator and/or an electronic oscillator regulated by a crystal. The said oscillator can be adapted for generating a clock signal. In an embodiment the crystal is a quartz crystal and/or the watch-components form or constitute a quartz watch.

Also provided is a system that comprises a first mobile phone as described in this document (i.e. "the device" or "mobile phone in the form of a wristwatch") and a second phone (in particular a mobile phone). The second phone is configured and/or adapted and/or programmed to redirect incoming phone calls (i.e. phone calls directed to the second phone) to the first mobile phone.

The second phone can have one or more features that were described for the first mobile phone (i.e. "the device"). In particular the second phone can comprise a SIM-card.

Short description of the drawings
- Fig. 1: perspective view of device
- Fig. 2: back view of device of Fig.1
- Fig. 3: side view of device of Fig.1
- Fig.4: top view of device of Fig.1
- Fig.5: bottom view of device of Fig.1
- Fig.6: exploded view of device of Fig.1
- Fig.7: alternative case with antennae in lugs.

### Detailed description of the drawings

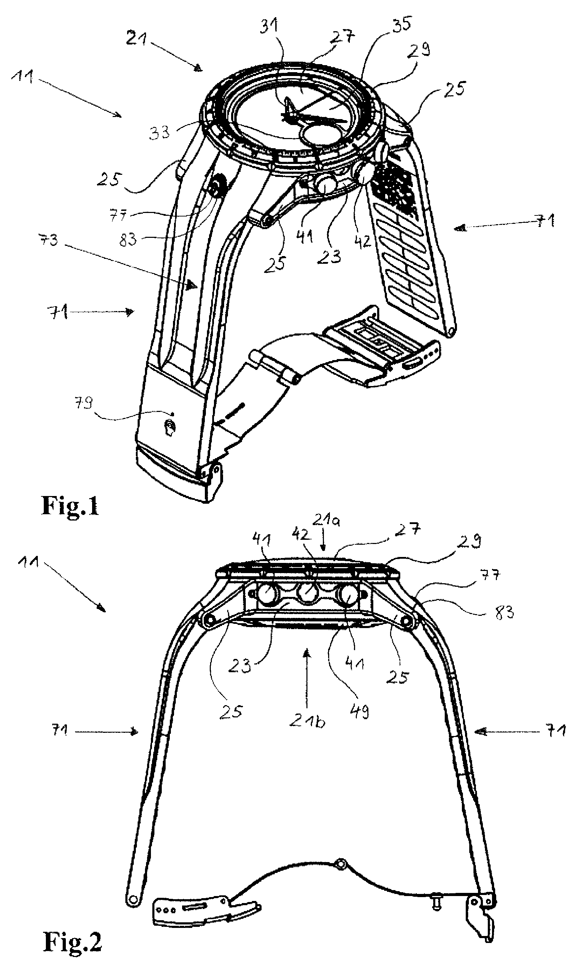

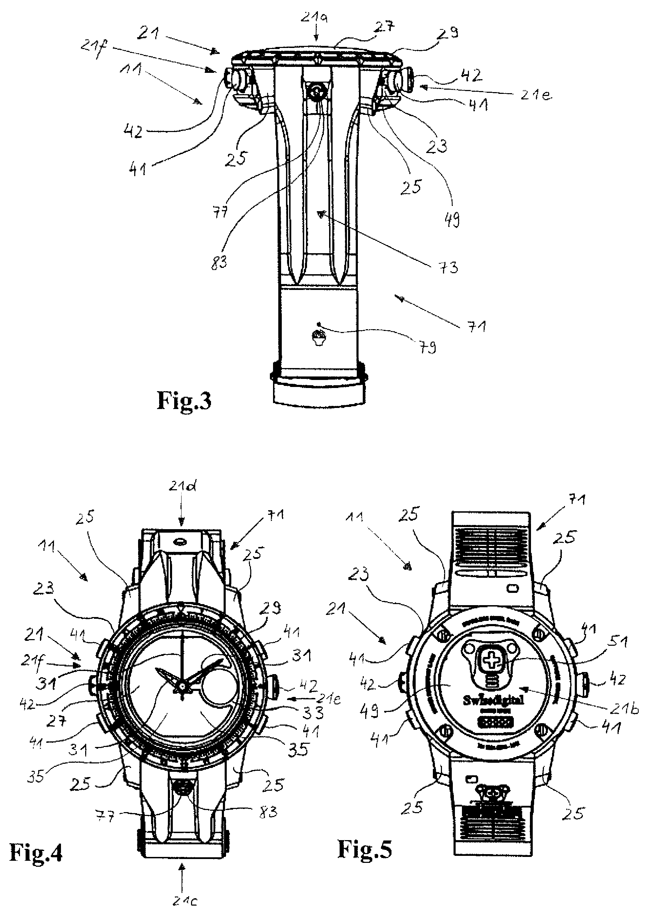

All drawings (Fig.1-6) depict the same embodiment of a device 11. The device 11 is both a mobile phone and a wristwatch which is why in this document it is referred to as a mobile phone in the form of a wristwatch.

The device 11 comprises a main body 21 and a band 71 adapted for assisting with securing the main body 21 to a wrist of a user. The main body 21 has a bottom 21b that faces the wrist of the user and a top 21 a that faces away from the wrist and is thus visible to the user when the device 11 is secured to the user's wrist. Between the top 21a and the bottom 21b on opposing sides of the device 11 there are a first side 21c and a second side 21d. The band 71 is connected at a first hinge to the first side 21c and at a second hinge to the second side 21d. The use of only one connection between the band 71 and the main body 21 (for example at the bottom of the main body) or the use of connections without hinges is however also conceivable. The side that faces the hand of the user shall be called the front side 21e while the side facing the elbow shall be called the back side 21f to better distinguish them from the first side 21c and the second side 21d where the band 71 is connected to the main body 21. Like the first side 21c and the second side 21d the front side 21e and the back side 21f are also located between the top 21a and the bottom 21b.

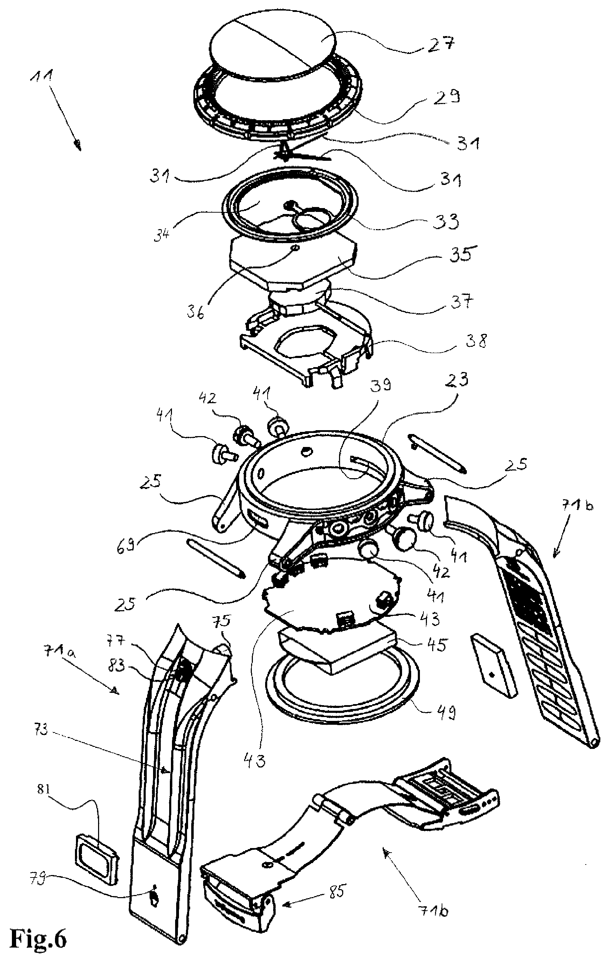

The components of the main body 21 can be best described using Fig.6 which depicts the device 11 in the form of an exploded view. The main body 21 comprises a case 23 that provides the means for attaching the band 71 in the form of lugs 25. The main body 21 and/or the band 71 can include one or more electrical components which can be internal to (for example embedded and/or enclosed within) the main body 21 or band 71 respectively. Preferably, the one or more electrical components of the band 71 - if present - are electrically coupled to one or more electrical components of the main body 21. One electrical component of the main body 21 to which electrical components of the band 71 are electrically coupled is preferably a circuit board 43 (preferably in the form of a printed circuit board assembly or PCBA).

The case 23, a back cover 49, and a transparent cover 27 define an interior space of the main body 21. Inside this space there is a first battery 45 (preferably adjacent to the back cover 49 for easy replaceability), preferably also a second battery (not shown), a circuit board 43, a display 35, optionally a holder 38, and watch-components like hands 31 and a movement 37 (preferably with a crystal oscillator, for example a quartz crystal oscillator).

Advantageously, the holder 38 has a form-fitting connection with the inner surface of the case 23 and the movement 37 and/or the display 35. This allows the holder 38 to establish a defined position of the movement 37 and/or the display 35 relative to the case 23. The holder 38 may take various forms and can for example provide a surface structure or an opening adapted to the outer dimensions of the movement 37 and may extend outwardly to the inner surface of the case 23. Additionally, the holder 38 can have a surface structure adapted to the outer dimensions of the display 35. This facilitates disassembly and thus repairs.

Both the display 35 (more precisely the display area as defined below) and the hands 31 are visible through the transparent cover 27 wherein the hands 31 are arranged between the transparent cover 27 and the display 35. The display 35 is arranged between the hands 31 and the movement 37 and comprises an opening 36. The hands 31, which include an hour hand and a minute hand, are connected to the movement 37 via said opening 36 and are rotatable about an axis. Preferably the display 35 (completely) encircles the part extending through the opening 36 and connecting the hands 31 to the movement 37. This allows for the display 35 to cover essentially the entire area that in a conventional wristwatch is taken up by the clock-face or dial.

For easier reference the visible area enclosed by a circle centered at the axis and having a radius corresponding to the length of the minute hand and/or the longest of the hands shall be called the clock-face 34. The part of the display 35 that is visible to the user shall be called the display area. The display 35 may be partially covered by a frame 33 that can divide the display 35 into two or more display areas. In the example shown in the figures the frame 33 divides the display 35 into a first display area and smaller second display area. One display area takes up at least half of the clock-face 34.

Surrounding the transparent cover 27 (for example on a bezel 29 as shown in the figures) there can be hour marks and optionally minute marks arranged on the main body 21. This optional feature facilitates reading the time without reducing the display area and without having to display markings on the display and thereby wasting energy.

While the first side 21c and the second side 21d provide the connection to the band 71 the front side 21e and/or the back side 21f may comprise one or more actuating means or control elements, for example - as shown - in the form of buttons 41 and/or crowns. A crown 42 at the front side 21e or the back side 21f is preferably operatively connected to the hands 31 and allows the adjustment of their position.

The case 23 has openings that allow the operative connection of the buttons 41 and optionally a crown 42 to the circuit board 43. The circuit board 43 is arranged between the bottom 21b or the first battery 45 and the movement 37. The circuit board 43 preferably extends to the inner surface of the case 23 so that the above mentioned operative connection is facilitated.

The case 23 has an additional opening 39 for inserting a SIM-card into the device 11 the opening being part of a SIM card slot which is equipped with contacts (not shown) for establishing a connection between the chip of the SIM card and the device 11 for data transfer.

The device 11 has at least two native functions one being a function as a telephone the other being a function as a watch. Other functions may include the function as a media player (providing media storage and playback), an address and/or telephone book (including a database the content of which may be displayed on the display 35). The telephone function and the watch function are preferably independent. For this purpose the device 11 preferably has two batteries, a first battery 45 (preferably a rechargeable battery) adapted for powering the telephone function and a second battery (not shown, preferably a button cell) adapted for powering the watch function. In a particularly preferred implementation the electrical components of the phone and the electrical components of the watch are separate sets of components.

The band 71 can be for example in the form of a strap or a bracelet. It is coupled to the main body 21 and comprises at least one (preferably one, two, or three) band portions 71a,71b. The band portions 71a,71b may include a clasp, buckle, or other attachment mechanism 85 to secure together those ends of the band portions that are not coupled to the main body 21. The band portions 71a,71b can be secured about a wrist of the user.

The band portions 71a,71b can include electrical components which can be internal to (for example embedded within) the associated band portion 71a,71b. For example a first band portion 71a may include a first band electrical component and/or a second band portion 71b may include a second band electrical component. The said electrical components can be electrically coupled to electrical components of the main body 21 (in particular to the circuit board 43), preferably via wired means. For this purpose the case 23 may comprise an opening through which said wired connection is established.

Preferably the band 71 is detachable from the main body 21. To facilitate this a band portion (first band portion 71a and/or second band portion 71b) can comprise a connector 75 and the main body 21 can comprise a matching connector 69 that - when connected to one another - establish the said wired connection.

The electrical components can include for example one or more of: an antenna 73 and/or a wireless communication transceiver (for example Bluetooth and/or WiFi and/or GSM), a GPS receiver (for example NAVSTAR and/or GLONASS and/or GALILEO), a sensor (for example temperature sensor and/or air pressure sensor 83 and/or accelerometer), a microphone 77, and a speaker 79. The speaker 79 is provided with an optional cover 81. The cover 81 can for example serve to prevent water from entering the speaker 79. Preferably the device 11 as a whole is water resistant (for example up to at least 3, 5, or 10 atm (atmospheres) water pressure and/or up to a water depth of at least 30, 50, or 100 meters and/or water resistant according to ISO 2281 valid at the date of filing of this application).

It is preferred that one or more or all of said electrical components of the band 71 or of the first band portion 71a or of the second band portion 71b are constructed as a flexible printed circuit (FPC).

Instead of a microphone 77 and/or a speaker 79 the device 11 may comprise connectors for connecting a microphone and/or a speaker or they may be connected to the device 11 wirelessly for example via Bluetooth.

The first band portion 71a and the second band portion 71b may also comprise matching connectors that are adapted for connecting and establishing an electrical connection when the ends of the band portions 71a,71b are secured together.

The electrical components of the kinds mentioned for the band 71 may alternatively or additionally be comprised in the main body 21. In particular, the main body 21 may comprise one or more sensors. One sensor can be a heart beat sensor 51 arranged at the bottom 21 of the main body 21 so that it contacts the skin of the user when the device 11 is worn.

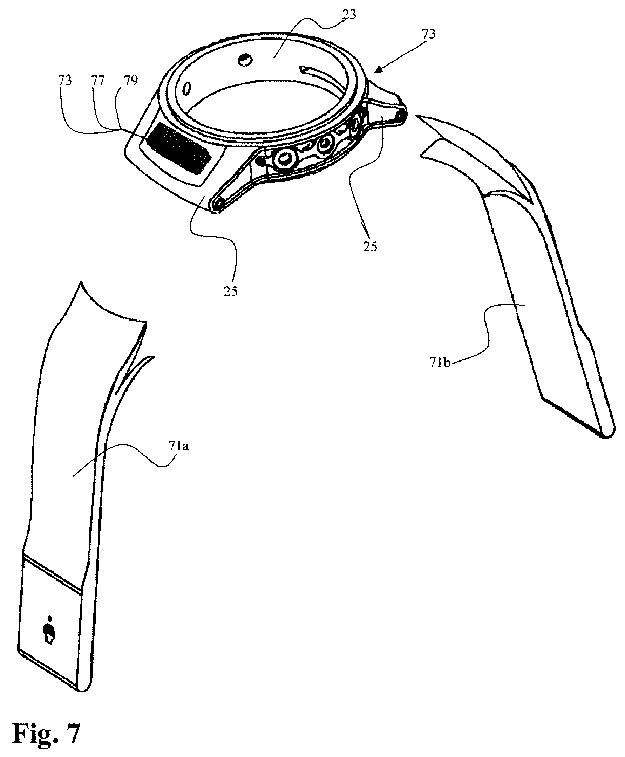

Fig.7 shows an alternative case 23 for the watch of Fig.1-6 which allows for the antennae 73 and/or the microphone 77 and/or the speaker 79 to be built into the lugs 25 instead of the band 71. The band portions 71a, 71b that connect to the lugs 25 both have an upper portion that covers the top of the lug 25 and a lower portion that covers the bottom of the lug 25 (i.e. the lug 25 to which the respective band portion 71a or 71b is connected).

### Reference numerals:

- 11: device
- 21: main body
- 21a: top of main body
- 21b: bottom of main body
- 21c: first side of main body
- 21d: second side of main body
- 21e: front side of main body
- 21f: back side of main body
- 23: case
- 25: lugs
- 27: transparent cover
- 29: bezel with markings
- 31: hands
- 33: frame
- 34: clock-face area
- 35: display
- 36: opening
- 37: movement with crystal oscillator
- 38: holder
- 39: opening of SIM-card slot
- 41: buttons
- 42: crown
- 43: circuit board
- 45: first battery
- 49: back cover
- 51: heart beat sensor
- 69: connector (for connection to 75)
- 71: band
- 71a: first band portion
- 71b: second band portion
- 73: antennae (part of flexible printed circuit in Fig.6; within lugs in Fig.7)
- 75: connector (for connection to 69)
- 77: microphone
- 79: speaker
- 81: cover for speaker
- 83: sensors
- 85: attachment mechanism

## Claims

1. Mobile phone in the form of a wristwatch comprising: a main body (21); a band (71) connected to the main body (21) and adapted for securing the main body (21) to the wrist of a user; a transparent cover (27); a display (35) having a continuous display area visible through the transparent cover (27); a first battery (45); a second battery; watch-components including a movement (37) and at least one hand (31), wherein the hand (31) is rotatable about an axis and arranged between the transparent cover (27) and the display (35); **characterized in that** the first battery (45) is adapted for providing power to the display (35) and the second battery is adapted for providing power to the watch-components, wherein the continuous display area takes up at least half of the clock-face (34) and/or at least half of the area (34) enclosed by a circle centered at the axis and having a radius corresponding to the length of the hand (31).

2. Mobile phone according to claim 1, **characterized in that** the display (35) is arranged between the hand (31) and the movement (37), wherein the hand (31) and the movement (37) are connected via an opening (36) extending through the display (35).

3. Mobile phone according to one of claims 1 to 2, **characterized in that** the movement (37) includes a crystal oscillator adapted for generating a clock signal, wherein the crystal is a quartz crystal.

4. Mobile phone according to one of claims 1 to 3, **characterized in that** it comprises one or more antennae (73), wherein the one or more antennae (73) are in the form of a flexible printed circuit embedded within the band (71), wherein the one or more antennae (73) are a GSM-antenna and/or a GPS-antenna and/or a WiFi-antenna and/or a Bluetooth-antenna.

5. Mobile phone according to one of claims 1 to 4, **characterized in that** it comprises one or more antennae (73), wherein the band (71) is connected to the main body (21) via lugs (25), wherein the one or more antennae (73) are integrated into the lugs (25).

6. Mobile phone according to one of claims 1 to 5, **characterized in that** it comprises a microphone (77) and a speaker (79), wherein the microphone (77) and the speaker (79) are arranged on or within the band (71).

7. Mobile phone according to one of claims 1 to 6, **characterized in that** it comprises a microphone (77) and a speaker (79), wherein the band (71) is connected to the main body (21) via lugs (25), wherein the microphone (77) and the speaker (79) are arranged integrated into the lugs (25).

8. Mobile phone according to one of claims 1 to 7, **characterized in that** it comprises a SIM-card-slot (39) configured to receive a SIM-card.

9. Mobile phone according to one of claims 1 to 8, **characterized in that** the band (71) is detachably connected to the main body (21), wherein both the main body (21) and the band (71) comprise electrical components detachably connected to one another via matching connectors (69,75).

10. Mobile phone according to one of claims 1 to 9, **characterized in that** it comprises one or more sensors (51,83), wherein the one or more sensors (51,83) are a heart-beat-sensor (51) and/or a temperature sensor (83) and/or an air pressure sensor (83), wherein the one or more sensors (51,83) comprise a heart-beat sensor (51) embedded within the main body (21).

11. System comprising a first mobile phone (11) according to one of claims 1 to 10 and a second mobile phone, **characterized in that** the second mobile phone is configured, adapted, and/or programmed to redirect incoming phone calls to the first mobile phone (11).
